(19) Europäisches Patentamt
European Patent Office
Office européen des brevets

(11) EP 2 226 295 B1

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(21) Anmeldenummer: **10001652.6**

(22) Anmeldetag: **18.02.2010**

(51) Int Cl.:
*C02F 3/28* *(2006.01)*       *C02F 1/52* *(2006.01)*
*C02F 1/38* *(2006.01)*       *C02F 103/32* *(2006.01)*
*C02F 1/56* *(2006.01)*

(54) **Biogasgewinnung aus molkehaltigem Abwasser**

Biogas generation from waste water containing whey

Production de biogaz à partir d'eaux usées contenant du petit-lait

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.02.2009 DE 102009009416**

(43) Veröffentlichungstag der Anmeldung:
**08.09.2010 Patentblatt 2010/36**

(73) Patentinhaber: **ENVIRO-CHEMIE GmbH**
**64380 Rossdorf (DE)**

(72) Erfinder:
• **Oles, Volker, Dr.**
**64839 Münster (DE)**
• **Engelhart, Markus, Dr.**
**60318 Frankfurt (DE)**

(74) Vertreter: **Dennemeyer & Associates S.A.**
**Vogelweidstrasse 8**
**60596 Frankfurt am Main (DE)**

(56) Entgegenhaltungen:
EP-A1- 0 302 852       EP-A1- 0 544 225
EP-A1- 1 531 178       EP-A1- 1 553 059
EP-A2- 0 866 042       WO-A1-97/34851
DE-A1- 19 946 299       DE-A1-102004 009 587

EP 2 226 295 B1

**Beschreibung**

Gebiet der Erfindung

Die Erfindung betrifft ein Verfahren und eine Vorrichtung zur Biogasgewinnung aus Abwässern, insbesondere molkehaltigen Abwässern.

Stand der Technik

Bei der Verarbeitung von Milch zu Käse und Quarkprodukten fallen Molken an.

Molke ist eine wässrige grünlich-gelbe Restflüssigkeit, die bei der Käseherstellung entsteht. Die bei der Produktion von Käse und Quarkerzeugnissen anfallenden Molken enthalten einen großen Teil des Milchzuckers, Reste an Proteinen und Fetten sowie Mineralien. Teilweise werden durch membrantechnische Verfahren, wie z. B. Ultrafiltration, auch Reste an Proteinen und Fetten aus den Molken entfernt. Dabei entsteht das sogenannte Molkepermeat, das zur Volumenreduktion zum Teil aufkonzentriert wird und dann zum Molkepermeatkonzentrat wird.

Aus Molke und Abwässern der Milchindustrie kann Biogas gewonnen werden. Die Biogasgewinnung aus Molke und Abwässern der Milchindustrie wird bereits mehrfach in industriellem Maßstab eingesetzt. Bei der Vergärung kommen unterschiedliche Typen von Anaerobreaktoren zum Einsatz. Die wichtigste verfahrenstechnische Aufgabe liegt darin, die aktive Biomasse, die die organischen Schmutzstoffe (Zucker, Proteine, usw.) zu Methan umsetzt, im sogenannten Methanreaktor zurück zu halten. Dazu gibt es unterschiedliche Reaktorsysteme, wie z. B. Reaktoren des UASB-Typs (upflow anaerobic sludge bed), die auf dem Prinzip der Granulierung anaerober Biomasse zu sogenannten Pellets (Linsenförmige bis kugelige Aggregate mit ca. 2 - 5 mm Durchmesser und hoher Sinkgeschwindigkeit) beruhen.

Sogenannte Festbettreaktoren stellen im Reaktorraum Aufwuchsflächen (Füllmaterial) bereit, an denen sich ein Biofilm aus anaeroben Bakterien bildet, der die biologischen Umsetzungsreaktionen katalysiert.

Die Behandlung komplexer Abwässer aus der Lebensmittel- und Milchindustrie stellt besondere Anforderungen an den Rückhalt anaerober Biomasse. Komplexe Abwässer sind **dadurch gekennzeichnet, dass** sie neben gelösten organischen Bestandteilen (z. B. Kohlenhydrate, Alkohole, etc.) auch unlösliche bzw. partikuläre Proteine und Fette enthalten. Dies trifft in besonderem Maße auf Abwässer der Milchindustrie zu. Komplexe Abwässer sind häufig schwierig anaerob zu reinigen, da Bestandteile wie Proteine und Fette nur langsam abgebaut werden und die Prozessgeschwindigkeit herabsetzen. Darüber hinaus erfolgt bei Reaktoren des UASB-Typs nur langsames Wachstum granularer Biomasse und die Stabilität von Pellets gegen Scherkräfte und ihre Absetzeigenschaften sind reduziert. Dies wird durch die geringere Effektivität des Abbaus komplexer Abwässer (50 % - 60 %) im Vergleich zu kohlehydratreichen Abwässern (85 % - 95 %) dokumentiert.

Die kritischen Randbedingungen für die Behandlung komplexer Abwässer sind daher der Biomasserückhalt und die Höhe des partikulären Anteils im Substrat.

Drüber hinaus kann es beim Abbau proteinreicher Abwässer unter Freisetzung von Ammonium, Phosphat und Sulfid zur Ausfällung unlöslicher Abbauprodukte kommen (Magnesium-AmmoniumPhosphat, Calcium-Phosphat, Eisen-Sulfid), die sich entweder im Schlammbett von UASB-Reaktoren anreichern oder auf Festbettmaterialien aufwachsen können.

Biogaserzeugung findet in anaeroben Anlagen statt. In dem gesteuerten Prozess der Biogasbildung sind verschiedene Arten von anaeroben Mikroorganismen beteiligt, deren Mengenverhältnis zueinander durch Ausgangsstoffe, pH-Wert, Temperatur- und Prozessverlauf beeinflusst wird.

Man unterscheidet nach dem heutigen Erkenntnisstand vier parallel bzw. nacheinander ablaufende und ineinandergreifende biochemische Einzelprozesse, die den anaeroben Abbau biogener Stoffe ermöglichen:

1. Während der Hydrolyse werden die Biopolymere in monomere Grundbausteine oder andere lösliche Abbauprodukte zerlegt. Fette werden in Fettsäuren, Kohlenhydrate, wie z. B. Polysaccharide, in Mono- oder Oligosaccharide und Proteine in Peptide bzw. Aminosäuren zerlegt, also langkettige Biopolymere in kurzkettige. Diese Reaktionen werden durch fakultativ anaerobe Mikroorganismen katalysiert, wobei diese die Edukte mittels ausgeschiedener Exoenzyme hydrolysieren. Dieser Reaktionsschritt ist aufgrund der Komplexität des Ausgangsmaterials in der Regel geschwindigkeitsbestimmend. (Als fakultativ anaerob werden Organismen bezeichnet, die sowohl unter anaeroben als auch unter oxischen Bedingungen wachsen können. Organismen, die nur unter anaeroben Bedingungen wachsen können, werden als obligat anaerob bezeichnet.)

2. Im Rahmen der Acidogenese (allgemeinsprachlich auch als Fermentation bezeichnet) - die zeitgleich zur Hydrolyse stattfindet - werden die monomeren Interdukte einerseits in niedere Fett-/Carbonsäuren, wie z. B. Butter-, Propion- und Essigsäure, andererseits in niedere Alkohole, wie z. B. Ethanol, umgesetzt. Bei diesem Umsetzungsschritt gewinnen die fakultativ anaeroben Mikroorganismen erstmals Energie. Bei dieser Umsetzung werden bereits bis zu 20 % des Gesamtanteils an Essigsäure gebildet.

3. Während der Acetogenese werden die niederen Fett- und Karbonsäuren sowie die niederen Alkohole durch acetogene Mikroorganismen zu Essigsäure (Anion Acetat) umgesetzt.

4. In der letzten, obligat anaerob ablaufenden Phase - der Methanogenese - wird die Essigsäure in Methan umgewandelt.

In der Druckschrift DE 199 46 299 A1 werden ein Verfahren und eine Vorrichtung zur gemeinsamen Vergärung von kohlenhydrat-, fett- und eiweißhaltigen Bioabfällen, cellulosereichen Bioabfällen, Faulschlamm aus Kläranlagen sowie Papierschlamm und Molke beschrieben. Dabei werden aus leicht und aus schwer abbaubaren Bioabfällen jeweils Suspensionen mit einem Trockensubstanz-Gehalt von ca. 10 % hergestellt. Anschließend gelangen diese in eine mesophil arbeitende Hydrolysestufe, in der eine anaerobe Hydrolyse und eine Acidogenese ablaufen. Aus dieser werden einerseits die sedimentierten, noch nicht vollständig abgebauten Stoffe abgezogen und zur Enzymbildung mit Molke und Papierschlamm unter aeroben Bedingungen versetzt. Dabei gelangt die Enzymlösung in die Suspension aus schwer abbaubaren Stoffen und leitet dort eine aerobe Hydrolyse ein. Andererseits wird die versäuerte, nahezu feststofffreie Lösung aus der anaeroben Hydrolysestufe gemeinsam mit dem Faulschlamm aus einer Kläranlage im Verhältnis 1 zu 1 in eine Methanstufe zwecks Acetogenese und Methanogenese eingeführt. Dort wird Methangas produziert, welches in einem Gasmotor zur Strom- und Wärmeerzeugung verwendet wird. Die entstehende Wärme wird zur Temperierung der Methanstufe und der anaeroben Hydrolysestufe sowie zur Beheizung und Hygienisierung der Suspensionen aus leicht abbaubaren und schwer abbaubaren Bioabfällen herangezogen.

Ein kombiniertes Verfahren zur Reinigung hoch belasteter Abwässer wird in der DE 196 48 646 A1 beschrieben. Die hier offenbarte Lösung umfasst ein mehrstufiges Verfahren zur Reinigung hoch belasteter Abwässer. Hierbei kann hoch belastetes Abwasser derart behandelt werden, dass es mit diesem Verfahren vollständig gereinigt wird. Dazu werden bei einer fermentativen Koagulation die Suspensa abgetrennt. Die noch verbleibende hohe Fracht wird in einer aeroben, diskontinuierlich arbeitenden Stufe des Hochleistungs-Bio-Reaktor-Systems wesentlich reduziert. Die Restfracht, insbesondere die verbleibenden Stickstoffverbindungen und anderen Pflanzennährstoffe, werden durch ein intensives pflanzliches Wachstum gereinigt. In einer dritten Stufe wird neben der tertiären Reinigung gleichzeitig eine Vergleichmäßigung des Ablaufes aus der Reinigung durch eine auf einer großen Verweilzeit des Abwassers in dieser Stufe basierenden Pufferwirkung und eine weitestgehende Unterdrückung der Bildung geruchsintensiver Stoffe erreicht.

Eine weitere Schrift (EP 0 712 381 B1) offenbart ein Verfahren zum Reinigen von Molkereiabwasser durch anaerobe Stoffumwandlung und Abtrennung der entstehenden Reaktionsprodukte. Die Molkereiabwasser durchlaufen dabei die folgenden Stufen:

a) Vorbehandeln des Abwassers mit einer Base;
b) Einführen des vorbehandelten Abwassers in einen Fermenter, anaerobes Fermentieren der im Abwasser vorhandenen Lactose zu Milchsäure und Nachreinigen der im Fermenter gebildeten Fermentationsbrühe;
c) Abkonzentrieren des Lactats im Abwasser und Aufkonzentrieren von Milchsäure und Base mit Hilfe bipolarer Elektrodialyse.

Keines dieser Verfahren ist jedoch für die Biogasgewinnung aus molkehaltigen Abwässern optimiert.

Aufgabe

Aufgabe der Erfindung ist es, ein Verfahren und eine Vorrichtung anzugeben, die die Erzeugung von Biogas aus hoch belasteten molkehaltigen Abwässern ermöglichen.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Im praktischen Betrieb von Molkereien werden hoch belastete Abwasserströme mit Molke-, Molkepermeat- und Molkepermeatkonzentratmengen in beliebigem Verhältnis vermischt. Diese Mischungen oder auch einzelne Ströme, im Folgenden Zulauf genannt, lassen sich zur Gewinnung von Biogas nutzen.

Es wird ein Verfahren zur Biogas-Gewinnung aus molkehaltigem Abwasser mit folgenden Schritten vorgeschlagen:

a) Zuführen von molkehaltigem Abwasser zu einem Trennmittel;

b) Abscheiden von gering belastetem molkehaltigem Abwasser mit einem Grad der organischen Verschmutzung unterhalb einer vorgegebenen Schwelle aus dem Trennmittel.

Als Maß für den Grad der organischen Verschmutzung, d. h. für die organische Belastung des Abwassers, wird z. B. der chemische Sauerstoff-Bedarf verwendet (CSB - chemischer Sauerstoff-Bedarf). Der Chemische Sauerstoffbedarf ist als Summenparameter ein Maß für die Summe aller im Wasser vorhandenen, unter bestimmten Bedingungen oxidierbaren Stoffe. Er gibt die Menge an Sauerstoff (in mg/Liter) an, die zu ihrer Oxidation benötigt würde, wenn Sauerstoff das Oxidationsmittel wäre.

c) Abführen von hoch belastetem molkehaltigem Abwasser mit einem Grad der organischen Verschmutzung oberhalb einer vorgegebenen Schwelle aus dem Trennmittel und Zuführen des hoch belasteten molkehaltigem Abwassers zu einem Vorlagetank.

d) Hydrolysieren des hoch belasteten molkehaltigen Abwassers im Vorlagetank. Der Vorlagetank dient dem hoch belasteten Abwasserstrom insbesondere zum Ausgleich von Mengen und Qualität;

e) Abführen des hoch belasteten Abwassers aus dem Vorlagetank und Zuführen des hoch belasteten Abwassers zu Konditioniermitteln;

f) Konditionieren des hoch belasteten Abwassers mit Hilfe der Konditioniermittel;

Bei der Konditionierung des hoch belasteten Abwassers werden Chemikalien zudosiert, die das Nährstoff- und Spurenelementegleichgewicht einstellen.g) Überführen des konditionierten hoch belasteten Abwassers in einen anaeroben Methanreaktor;

h) Methanisierung des hoch belasteten Abwassers im anaeroben Methanreaktor mit Hilfe von anaeroben Mikroorganismen, wodurch sich Methangas und Bioschlamm bildet.

i) Gewinnen von Methangas aus dem anaeroben Methanreaktor;

j) Abführen von Bioschlamm aus dem Methanreaktor;

k) Abscheiden von vorgereinigtem Abwasser aus dem Bioschlamm, wodurch konzentrierter Bioschlamm entsteht; und

l) Rückführen des konzentrierten Bioschlamms in den anaeroben Methanreaktor.

Das Verfahren basiert also auf der anaeroben Vergärung, bei der die im Zulauf enthaltenen organischen Inhaltsstoffe in Methan umgesetzt werden. Als Nebenprodukt entstehen $CO_2$ sowie andere Gase in geringen Mengen, wie z. B. $H_2S$. Die Biomasse vermehrt sich durch den Stoffwechsel, was zu einer Produktion von Bioschlamm führt. Die anaerobe Vergärung kann sowohl im mesophilen wie im thermophilen Bereich erfolgen. In der technischen Mikrobiologie (Biotechnologie) laufen bakterielle Prozesse dann bei thermophilen Bedingungen, wenn sie bei über 50 °C ablaufen. Liegen die Temperaturen darunter, spricht man von mesophilen Bedingungen (30-40°C). Sowohl die Gärung als auch die Kompostierung können bei thermophilen Bedingungen betrieben werden.

Sowohl die Trennmittel als auch die Konditioniermittel können als Tank (Trenntank, Konditioniertank) oder aber als ein spezieller Leitungsabschnitt ausgeführt sein.

Die Methanisierung der organischen Fracht (z. B. Molke) im Abwasser erfolgt im Reaktor durch Mikroorganismen. Dabei wird die Methanisierung der organischen Fracht im Abwasser auf anaerober Basis realisiert, d. h. die im Bioreaktor vorhandenen Mikroorganismen benötigen zum Leben und Vermehren keinen freien Sauerstoff und die Vorgänge im Bioreaktor laufen unter Ausschluss von Sauerstoff ab.

Bei der anaeroben Methanisierung ist es stets schwierig, die Kultur an Mikroorganismen zu erhalten. Diese vermehrt sich unter anaeroben Bedingungen nur langsam. Durch das vorgeschlagene Verfahren wird die Mikroorganismen-Kultur im Bioschlamm maximal zurück gewonnen und steht im Methanreaktor erneut zur Verfügung. Dadurch wird die Effizienz des Verfahrens optimiert.

Besonders vorteilhaft bei dem Verfahren ist, dass die gezielte Rückführung der Biomasse aus dem Zentrifugalabscheider ihre wiederholte Verwendung im Bioreaktor ermöglicht. Außerdem werden die in der Molke enthaltenen Proteine so lange wie möglich im System gehalten, was ihren Abbau begünstigt. Auch verringert sich der für die Einstellung des notwendigen pH-Wertes im Bioreaktor erforderliche Bedarf an Natronlauge.

Die in der vorgeschlagenen Lösung gewählte Verfahrenstechnik verknüpft hohe Anforderungen an den Rückhalt der anaeroben Biomasse und einen weitergehenden Abbau von Abwasserinhaltsstoffen.

Vorteilhafterweise erfolgt im Konditioniertank eine Konditionierung des hochbelasteten Abwassers unter Dosierung (Zuführung) von Hilfsstoffen.

Von Vorteil ist es auch, dass die Konditionierung unter Dosierung eisenhaltiger Metallsalze erfolgt und in Abhängigkeit von einer im Zulauf gemessenen CSB- und Schwefelkonzentration und eines zugeführten Volumenstroms erfolgt.

Der Vorlagebehälter kann auch mit einer vor geschalteten Pasteurisierungseinheit bzw. einer Dosiereinheit für Wasserstoffperoxid-Lösung ($H_2O_2$) ausgerüstet sein, um Fermentationsprozesse zu unterdrücken, die zu einer Versäuerung der leicht-abbaubaren organischen Bestandteile des hoch belasteten Abwassers führen können. Als Leitparameter werden pH-Wert und Redoxpotenzial in der Steuerung der Hydrolyse on-line überwacht.

Die Trennung von hoch und gering belastetem Abwasser im Trenntank erfolgt vorteilhafterweise über eine Weiche. Diese besteht aus einer on-line-CSB-Messung und der Ansteuerung zweier Ventile bzw. Abgänge "hoch belastet" und "schwach belastet".

Die Trennung von hoch und gering belasteten Abwasserströmen steigert in sinnvoller Weise die Effektivität des Gesamtprozesses. Hoch belastete Ströme sind Träger der Hauptschmutzfracht bei geringem Volumenstrom. Gering belastete Ströme (z.B. Spüloder Reinigungswässer) tragen nur den geringeren Teil der Schmutzfracht bei hohem hydraulischem Volumenstrom. Vorteilhaft wird daher die Trennung nach dem Grad der organischen Verschmutzung in den Strömen realisiert (gemessen als SAK, CSB oder TOC) (SAK: Messung des spektralen Absorptionskoeffizienten, TOC: (engl.) total organic carbon). Die anaerobe Behandlung des hoch belasteten Stroms ermöglicht die weitergehende Hydrolyse partikulärer und polymerer Inhaltsstoffe und die nachfolgend effektive Umsetzung im Methanreaktor bei angepasster hydraulischer Verweilzeit (hoher Abbaugrad). Diese Verweilzeit im Methanreaktor kann i. d. R. mehr als 5 Tage betragen. Trotzdem ergeben sich kleine Reaktorvolumina durch die vorgeschaltet Abtrennung des gering belasteten Abwassers im Trenntank. Das gering belastete Abwasser mit geringem Methanbildungspotenzial wird um das Behandlungssystem geführt, so dass keine Verdünnung erfolgt. Dies ist vorteilhaft, weil die Hydrolysegeschwindigkeit mit der Partikel- bzw. Molekülgröße und der Konzentration hydrolysierbarer Substanzen ansteigt. Hohe Konzentrationen hydrolysierbarer Substanzen steigern daher die Hydrolysegeschwindigkeit, der i. d. R. für solche Systeme der geschwindigkeitslimitierende Schritt des anaeroben Abbaus ist. Die Effektivität des Abbaus steigt dadurch. Die Effektivität wird darüber hinaus durch die Rückführung der Biomasse in den Methanreaktor gesteigert, da die Hydrolyse polymerer Schmutzstoffe ebenfalls linear von der Schlammkonzentration im Reaktor abhängt.

Die Effizienz des Verfahrens kann weiter gesteigert werden, wenn das gering belastete Abwasser unter Umgehung des Konditionierungstanks und des Methanreaktors mit dem anaerob vorgereinigten, hoch belasteten Abwasserstrom in einer gemeinsamen Nachreinigung vereinigt wird.

Die aus dem Bioschlamm abgeschiedene Flüssigkeit kann ebenfalls der Nachreinigung zugeführt werden. Dadurch verlassen nur hoch-gereinigte Abwässer die Anlage.

Um das Biomassewachstum im Reaktor zu begünstigen, werden eisenhaltige Metallsalze im Konditionierungstank zudosiert. Die Dosierung der Metallsalze erfolgt vorzugsweise in Abhängigkeit von der im Zulauf gemessenen CSB- und Schwefelkonzentration und des zugeführten Volumenstroms. Neben eisenhaltiger Metallsalzen können bedarfsweise auch noch weitere Metallsalze, insbesondere solche mit Ni, Co oder Mo, zugegeben werden.

In einer vorteilhaften Ausführung des Verfahrens liegt die vorgegebene Schwelle für die Trennung zwischen hoch und gering belastetem molkehaltigem Abwasser bei einem chemischen Sauerstoff-Bedarf von 3.000 mg/Liter. Die Schwelle kann aber auch bei 4.000 oder 5.000 oder 6.000 oder 7.000 oder 8.000 oder 9.000 oder 10.000 mg/Liter liegen.

Sowohl die Trennmittel als auch die Konditioniermittel können als Tank (Trenntank, Konditioniertank) oder aber als ein spezieller Leitungsabschnitt ausgeführt sein.

Zur Erfindung gehört auch eine Vorrichtung für die Biogas-Gewinnung aus molkehaltigem Abwasser, die folgende Bestandteile aufweist:

a) ein Trennmittel (105) zur Aufnahme von molkehaltigem Abwasser (104);
b) Mittel zum Abscheiden von gering belastetem molkehaltigem Abwasser (102) mit einem Grad der organischen Verschmutzung unterhalb einer vorgegebenen Schwelle aus dem Trennmittel (105);
c) einen Vorlagetank (106) zur Aufnahme von hoch belastetem Abwasser (104) mit einem Grad der organischen Verschmutzung oberhalb einer vorgegebenen Schwelle aus dem Trennmittel (105);
d) Mittel zum Hydrolysieren des hoch belasteten Abwassers im Vorlagetank (106);
e) Mittel zum Abführen des hoch belasteten Abwassers (100) aus dem Vorlagetank (106) und Mittel zum Zuführen des hoch belasteten Abwassers (100) zu Konditioniermitteln (200);
f) einen anaeroben Methanreaktor (108) zur Aufnahme des konditionierten Abwassers (100), in dem sich Methangas (112) und Bioschlamm bildet;
g) Mittel zum Gewinnen von Methangas (112) aus dem anaeroben Methanreaktor (108);
h) Mittel zum Abführen des Bioschlamms aus dem Methanreaktor (108);
i) einen Abscheider (128) zum Abscheiden von vorgereinigtem Abwasser (124) aus dem Bioschlamm, wodurch konzentrierter Bioschlamm entsteht; und
j) Mittel zum Rückführen (130) des konzentrierten Bioschlamms in den anaeroben Methanreaktor (108).

Als Abscheider wird vorteilhafter Weise ein Zentrifugalabscheider verwendet, z. B. ein Dekanter oder Separatoren. Ein Zentrifugalabscheider arbeitet unter Ausnutzung der Massenträgheit und kann z. B. die Bestandteile von Suspensionen und Emulsionen von einander trennen.

Weitere Einzelheiten und Merkmale ergeben sich aus der nachfolgenden Beschreibung eines bevorzugten Ausführungsbeispiels in Verbindung mit den Unteransprüchen. Hierbei können die jeweiligen Merkmale für sich allein oder zu mehreren in Kombination miteinander verwirklicht sein. Die Möglichkeiten, die Aufgabe zu lösen, sind nicht auf das Ausführungsbeispiel beschränkt. So umfassen beispielsweise Bereichsangaben stets alle - nicht genannten - Zwischenwerte und alle denkbaren Teilintervalle.

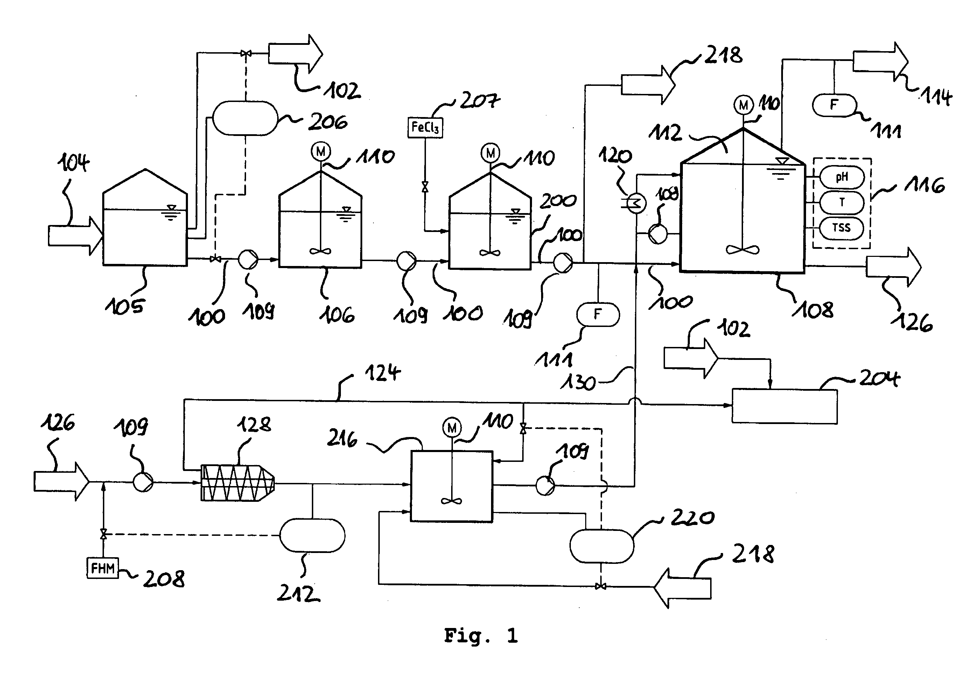

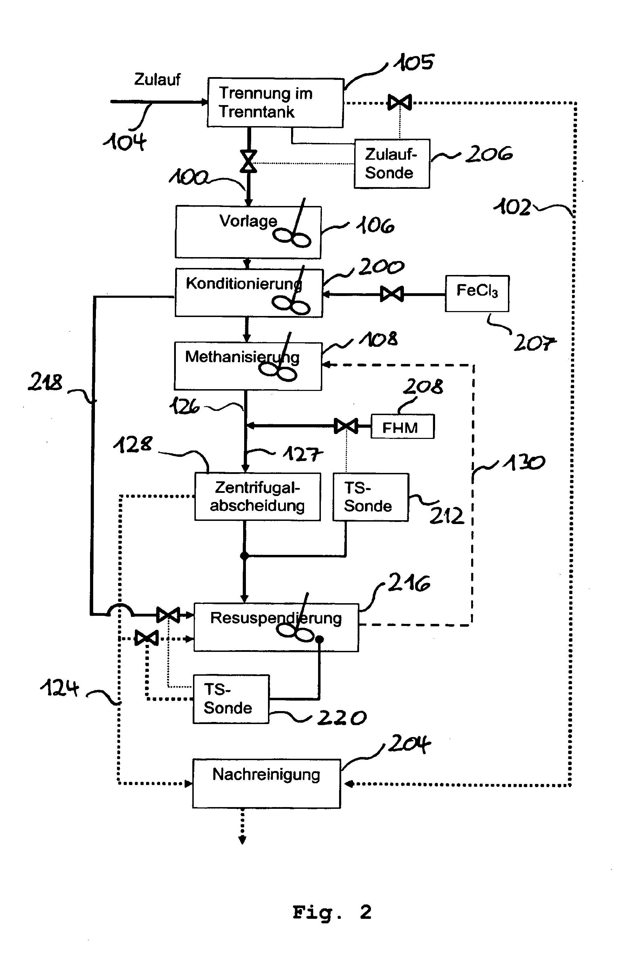

Im Folgenden wird die Abwasser-Aufbereitung an Hand der Figuren 1 und 2 beschrieben. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1     eine Schematische Darstellung der Vorrichtung für die Abwasseraufbereitung; und

Fig. 2     ein Blockschema des Verfahrensablaufes für die Abwas- seraufbereitung.

Im Folgenden wird die Abwasser-Aufbereitung an Hand der Figuren 1 und 2 beschrieben. Fig. 1 zeigt die für die Abwasser-Aufbereitung verwendete Vorrichtung. Fig. 2 zeigt den Verfahrensablauf für die Abwasser-Aufbereitung.

Bei der gewählten Verfahrenstechnik erfolgt im Trenntank 105 eine vorgeschaltete Trennung der bei der Produktion anfallenden Abwässer 104 in hoch und gering belastete Abwasser-Teilströme 100 und 102. Die hoch belasteten Teilströme 100 weisen i.d.R. CSB-Werte oberhalb eines CSB-Schwellenwertes von 3.000 mg/L auf, gering belastete Teilströme 102 dagegen i.d.R. CSB-Werte unterhalb dieser Schwelle.

Die Trennung kann vorteilhafter Weise direkt in der Produktion am Entstehungsort des Abwassers oder wie in dem dargstellten Ausführungsbeispiel des Verfahrens durch automatische online Messtechnik 206 zur Erfassung der organischen Verschmutzung des Mischabwassers / Zulaufs 104 vorgenommen werden, z. B. durch on-line-SAK-Messung (Messung des Spektralen Absorptionskoeffizienten) oder on-Line-CSB- oder TOC-Messung. Der gesamte organische Kohlenstoff oder TOC (engl.: total organic carbon) ist ein Summenparameter in der Wasser- und Abwasseranalytik und spiegelt die Belastung des Wassers mit organischen Stoffen wider.

Diese Messtechnik wird im Trenntank 105 mit einer kurzen hydraulischen Aufenthaltszeit von weniger als einer halben Stunde eingebaut. Durch Einbau einer automatischen Abwasserweiche mit zwei Regelventilen, die durch ein verschmutzungsabhängiges Signal der on-line-Messtechnik 206 geschaltet werden, wird hoch verschmutztes Abwasser 100 in einen dem Methanreaktor 108 vorgeschalteten Vorlagetank 106 geleitet. Gering belastetes Abwasser 102 wird am Konditionierungstank 200 und Methanreaktor 108 vorbei geführt und mit dem anaerob vorgereinigten, hoch belasteten Abwasserstrom 124 in einer gemeinsamen Nachreinigung 204 vereinigt.

Diese Nachreinigung 204 kann auf biologischem (anaerobem oder aerobem) Weg, auf chemisch-physikalischem (z.B. advanced oxidation processes, AOP, oder Fällung / Flockung) bzw. membrantechnischem Prozess, wie Ultra-Filtration (UF), Nano-Filtration (NF), Umkehr-Osmose (UO) oder in Kombinationen dieser Prozesse erfolgen.

Im Vorlagetank 106 erfolgt das Hydrolysieren des hoch belasteten molkehaltigen Abwassers 100. Aus dem Vorlagetank 106 wird das hydrolysierte hoch belastete Abwasser 100 weiter in einen Konditionierungstank geleitet.

Im Konditionierungstank 200 erfolgt in einer vorteilhaften Ausführung des Verfahrens eine angepasste Dosierung 207 von Hilfsstoffen zu hoch belastetem Abwasser.

Die Konditionierung 200 erfolgt bevorzugt unter Dosierung 207 eisenhaltiger Metallsalze (z.B. $FeCl_3$) in Abhängigkeit der im Zulauf 104 gemessenen CSB- und Schwefelkonzentration und des zugeführten Volumenstroms nach der Formel:

$$Fe\,[kg/d] \leq \left\{ \frac{CSB\,[mg/L]}{1000 \cdot 55{,}845} + \frac{S\,[mg/L]}{32{,}066} \right\} \cdot 55{,}845 \cdot \frac{Q_{Zulauf}\,[m^3/d]}{1000}$$

Dabei bezeichnet:

- Fe die zuzuführende Eisen-Menge in kg pro Tag;
- S die Konzentration an Schwefel im Zulauf; und
- $Q_{Zulauf}$ die Menge an Zulauf in Kubikmetern pro Tag.

Neben Eisensalzen können noch weitere Metallsalze insbesondere Ni, Co, Mo zugegeben werden.

Optional ist der Vorlagetank 106 mit einer vorgeschalteten Pasteurisierungseinheit bzw. einer Dosiereinheit für Wasserstoffperoxid-Lösung ($H_2O_2$) ausgerüstet, um Fermentationsprozesse zu unterdrücken, die zu einer Versäuerung der leicht-abbaubaren organischen Bestandteile des hoch belasteten Abwassers führen können.

Als Leitparameter werden pH-Wert und Redoxpotenzial in der Vorlage on-line überwacht.

Der so vorbehandelte hoch belastete Abwasserteilstrom / Zulauf 100 wird vom Vorlagetank 106 zunächst unter Benutzung einer Pumpe 109 in den Konditionierungstank 200 und von dort in den anaeroben Methanreaktor 108 gegeben. Der Methanreaktor 108 ist mit einer Mischeinrichtung 110 versehen. Im Reaktor 108 entsteht durch einen mikrobiologischen Prozess das Biogas bzw. Methan 112, das im oberen Teil des geschlossenen Methanreaktors 108 gesammelt wird und von dort über eine Gasleitung 114 abgeführt und gegebenenfalls verwertet wird. Mit dem Flowmeter 111 wird der Volumenstrom des abgeführten Biogases gemessen. Ebenfalls mit einem Flowmeter 111 wird der Volumenstrom des Zulaufs 100 zum Methan-Reaktor gemessen.

Der Methanreaktor 108 wird über die Leitparameter 116, wie Temperatur T, pH-Wert und TSS-Konzentration (TS5 = ungelöste Stoffe = Total suspended solids), sowie über die Biogasmenge 112 und den Zulauf 100 kontrolliert.

Die Temperatureinstellung erfolgt durch einen Wärmetauscher 120, der den Zulauf 100 auf die gewünschte Temperatur erwärmt und/oder den Reaktorinhalt im Kreislauf erwärmt. Alternativ zum Wärmetauscher 120 kann auch die direkte Aufwärmung durch z. B. Zugabe von Dampf erfolgen.

Die für die anaerobe Vergärung im Methanreaktor 108 enthaltenen Mikroorganismen verlassen den Reaktor 108 vollständig oder in Teilen mit dem Ablauf 126. Der Ablauf 126 des Bioreaktors 108 kann z. B. in einer Kläranlage weiter gereinigt werden.

Die Abscheidung des Bioschlamms und nicht hydrolysierter, partikulärer Proteine und Fette im Ablauf 126 des Methanreaktors 108 erfolgt bevorzugt in einem Zentrifugalabscheider 128, alternativ in einem Dekanter oder sonstigen Separatoren, unter Einsatz von polymeren Flockungsmitteln (Polyelektrolyte) 208. Diese bekannten Flockungshilfsmittel (FHM) 208 können Träger kationischer oder anionischer Ladungen sein bzw. nichtionogener Natur. Bevorzugt werden kationische FHM 208 eingesetzt oder kationische FHM in Kombination mit nichtionogenen / anionischen FHM 208. Die FHM 208 werden im Zulauf 127 des Zentrifugalabscheiders 128 unter hoher Turbulenz mengenproportional oder gesteuert durch on-line-Trockensubstanz-Sensoren 212 zugegeben und mit der Feststoffsuspension vermischt. Durch elektrostatische Anziehung und andere Prozesse erfolgt die Koagulation der Feststoffe, die im Zentrifugalabscheider 128 abgetrennt werden.

Abgetrennte Feststoffe im Abscheider 128 sind nicht nur Bioschlamm, sondern auch nicht abgebaute organische Fracht (z. B. Molke).

Ein Teil des gereinigten Abwassers 124 mit löslichen Inhaltsstoffen verlässt den Zentrifugalabscheider 128 in Richtung der Nachreinigung 204. Die Feststoffkonzentration bzw. Trübung des aus dem Zentrifugalabscheider 128 ablaufenden gereinigten Abwassers kann über eine on-line-Sonde 212 erfasst werden, um angepasst die Zugabe von FHM zu steuern.

Die abgetrennten Feststoffe werden in einen kontinuierlich durchmischten sogenannten Resuspendierungstank 216 abgeworfen und es erfolgt erneut das Zuführen 130 in den Methanreaktor 108. Dazu werden die Feststoffe im Resuspendierungstank 216 entweder mit einem Teil des gereinigten Abwassers oder in einer Variante des Verfahrens mit einem Teil 218 des hydrolysierten hoch belasteten Abwassers vermischt. Die Mischung Feststoff zu Resuspendierungswasser wird dergestalt eingestellt, dass sich im Resuspendierungstank 216 im allgemeinen Feststoffkonzentrationen (gemessen als Trockenrückstand TR) von TR < 6 % einstellen. Die Zugabe des Abwassers in den Resuspendierungstank 216 erfolgt entweder proportional zum Massenstrom des Feststoffabwurfs oder in einer Variante des Verfahrens ebenfalls gesteuert über die im Resuspendierungstank 216 mit der Sonde 220 gemessene Feststoffkonzentration.

Bezugszeichen

| | |
|---|---|
| 100 | hoch belasteteter Teilstrom |
| 102 | gering belasteteter Teilstrom |
| 104 | Mischwasser / Zulauf |
| 105 | Trenntank / Trennbehälter |
| 106 | Vorlagetank |
| 108 | Methanreaktor (Bioreaktor) |
| 109 | Pumpe |
| 110 | Mischeinrichtung (Rührwerk) |
| 111 | Flowmeter |
| 112 | Biogas |
| 114 | Gasleitung für Biogas |
| 116 | Messvorrichtung für Leitparameter |
| 120 | Wärmetauscher |

124     Ablauf / Abwasser mit löslichen Inhaltsstoffen
126     Ablauf des Bioreaktors
127     Zulauf des Zentrifugalabscheiders
128     Zentrifugalabscheider (Decanter, Separatoren)
130     Rückführung des feststoffhaltigen Abwurfs des Zentrifu- galabscheiders zum Bioreaktor
200     Konditionierungstank/ Konditionierung
204     Nachreinigung
206     On-line-Sonde (Zulauf-Sonde)
207     Dosierung von Hilfsstoffen
208     Dosierung (Zugabe) von Flockungsmitteln / Flockungs- hilfsmitteln
212     Online-Sonde (TS-Sonde)
216     Resuspendierung / Resuspendierungstank
218     Abwasser-Zulauf zum Einstellen des TS-Gehalts im Re- suspendierungstank
220     Online-Sonde (TS-Sonde)

**Patentansprüche**

1.  Verfahren zur Biogas-Gewinnung aus molkehaltigem Abwasser mit folgenden Schritten:

    a) Zuführen von molkehaltigem Abwasser (104) zu einem Trenntank oder einer Trennleitung (105) ;
    b) Abscheiden von gering belastetem molkehaltigem Abwasser (102) mit einem Grad der organischen Verschmutzung unterhalb einer vorgegebenen Schwelle aus dem Trenntank oder der Trennleitung (105);
    c) Abführen von hoch belastetem molkehaltigem Abwasser (100) mit einem Grad der organischen Verschmutzung oberhalb einer vorgegebenen Schwelle aus dem Trenntank oder der Trennleitung (105) und Zuführen des hoch belasteten molkehaltigem Abwassers (100) zu einem Vorlagetank (106);
    d) Hydrolysieren des hoch belasteten molkehaltigen Abwassers (100) im Vorlagetank (106);
    e) Abführen des hoch belasteten Abwassers (100) aus dem Vorlagetank (106) und Zuführen des hoch belasteten Abwassers (100) zu einem Konditioniertank oder einer Konditionierleitung (200);
    f) Konditionieren des hoch belasteten Abwassers (100) mit Hilfe des Konditioniertanks oder der Konditionierleitung (200);

        f1) wobei das Konditionieren (200) unter Dosierung (207) eisenhaltiger Metallsalze erfolgt;
        f2) wobei die Dosierung (207) der eisenhaltigen Metallsalze in Abhängigkeit von einer im Zulauf (104) gemessenen CSB- und Schwefelkonzentration und eines zugeführten Volumenstroms erfolgt;

    g) Überführen des konditionierten hoch belasteten Abwassers (100) in einen anaeroben Methanreaktor (108);
    h) Methanisierung des hoch belasteten Abwassers (100) im anaeroben Methanreaktor (108) mit Hilfe von anaeroben Mikroorganismen, wodurch sich Methangas (112) und Bioschlamm bildet;
    i) Gewinnen von Methangas (112) aus dem anaeroben Methanreaktor (108);
    j) Abführen von Bioschlamm aus dem Methanreaktor (108);
    k) Abscheiden von vorgereinigtem Abwasser (124) aus dem Bioschlamm, wodurch konzentrierter Bioschlamm (130) entsteht; und
    l) Rückführen (130) des konzentrierten Bioschlamms in den anaeroben Methanreaktor (108).

2.  Verfahren nach dem vorhergehenden Anspruch,
    **dadurch gekennzeichnet,**
    **dass** die Trennung in hoch belastete und schwach belastete Abwässer im Trenntank oder in der Trennleitung (105) über eine Weiche erfolgt.

3.  Verfahren nach einem der vorhergehenden Ansprüche,
    **dadurch gekennzeichnet,**
    **dass** das gering belastete Abwasser (102) und das vorgereinigte Abwasser (100) einer gemeinsamen Nachreinigung (204) zugeführt werden.

4.  Verfahren nach einem der vorhergehenden Ansprüche,
    **dadurch gekennzeichnet,**
    **dass** die vorgegebene Schwelle für den chemischen SauerstoffBedarf 3.000 mg/Liter beträgt.

**5.** Vorrichtung für die Biogas-Gewinnung aus molkehaltigem Abwasser, die folgende Bestandteile aufweist:

a) ein Trenntank oder eine Trennleitung (105) zur Aufnahme von molkehaltigem Abwasser (104);
b) Mittel zum Abscheiden von gering belastetem molkehaltigem Abwasser (102) mit einem Grad der organischen Verschmutzung unterhalb einer vorgegebenen Schwelle aus dem Trenntank oder der Trennleitung (105);
c) einen Vorlagetank (106) zur Aufnahme von hoch belastetem Abwasser (104) mit einem Grad der organischen Verschmutzung oberhalb einer vorgegebenen Schwelle aus dem Trenntank oder der Trennleitung (105);
d) Mittel zum Hydrolysieren des hoch belasteten Abwassers im Vorlagetank (106);
e) Mittel zum Abführen des hoch belasteten Abwassers (100) aus dem Vorlagetank (106) und Mittel zum Zuführen des hoch belasteten Abwassers (100) zu einem Konditioniertank oder einer Konditionierleitung (200);
f) einen anaeroben Methanreaktor (108) zur Aufnahme des konditionierten Abwassers (100), in dem sich Methangas (112) und Bioschlamm bildet;
g) Mittel zum Gewinnen von Methangas (112) aus dem anaeroben Methanreaktor (108);
h) Mittel zum Abführen des Bioschlamms aus dem Methanreaktor (108);
i) einen Abscheider (128) zum Abscheiden von vorgereinigtem Abwasser (124) aus dem Bioschlamm, wodurch konzentrierter Bioschlamm entsteht; und
j) Mittel zum Rückführen (130) des konzentrierten Bioschlamms in den anaeroben Methanreaktor (108).

**Claims**

**1.** A method for biogas extraction from waste water containing whey, comprising the following steps:

a) feeding of the waste water containing whey (104) to a separation tank or a separation line (105);
b) precipitating of lightly contaminated waste water containing whey (102) at a degree of organic contamination below a specified threshold from the separation tank or the separation line (105);
c) discharging highly contaminated waste water containing whey (100) at a degree of organic contamination above a specified threshold from the separation tank or the separation line (105), and feeding of the highly contaminated waste water containing whey (100) to a receiving tank (106);
d) hydrolyzing of the highly contaminated waste water containing whey (100) in the receiving tank (106);
e) discharging of the highly contaminated waste water (100) from the receiving tank (106) and feeding of the highly contaminated waste water (100) to a conditioning tank or a conditioning line (200);
f) conditioning of the highly contaminated waste water (100) with the aid of the conditioning tank or the conditioning line (200);

f1) wherein the conditioning (200) is carried out under dosage (207) of metal salts containing iron;
f2) wherein the dosage (207) of the metal salts containing iron is carried out as a function of a CSB and sulfur concentration measured in the intake (104) and a fed volume flow;

g) transferring the conditioned, highly contaminated waste water (100) into an anaerobic methane reactor (108);
h) methanation of the highly contaminated waste water (100) in the anaerobic methane reactor (108) with the aid of anaerobic microorganisms, by means of which methane gas (112) and biosludge are formed;
i) extraction of methane gas (112) from the anaerobic methane reactor (108);
j) discharging the biosludge from the methane reactor (108);
k) precipitating pre-purified waste water (124) from the biosludge, by means of which concentrated biosludge (130) is created; and
l) returning (130) the concentrated biosludge into the anaerobic methane reactor (108).

**2.** The method according to the previous claim,
**characterized in that**
the separation is carried out into highly contaminated and lightly contaminated waste waters in the separation tank or in the separation line (105) via a deflector.

**3.** The method according to one of the previous claims,
**characterized in that**
the lightly contaminated waste water (102) and the pre-purified waste water (100) are fed to a common subsequent purification (204).

**4.** The method according to one of the previous claims,
**characterized in that**
the specified threshold for the chemical oxygen requirement is 3,000 mg/liter.

**5.** A device for biogas extraction from waste water containing whey, comprising the following components:

a) a separation tank or a separation line (105) for the intake of waste water containing whey (104);
b) means for precipitating lightly contaminated waste water containing whey (102) at a degree of the organic contamination below a specified threshold from the separation tank or the separation line (105);
c) a receiving tank (106) for the intake of highly contaminated waste water (104) at a degree of the organic contamination above a specified threshold from the separation tank or the separation line (105);
d) means for hydrolyzing the highly contaminated waste water in the receiving tank (106);
e) means for discharging the highly contaminated waste water (100) from the receiving tank (106), and means for feeding the highly contaminated waste water (100) to a conditioning tank or a conditioning line (200);
f) an anaerobic methane reactor (108) for the intake of the conditioned waste water (100), in which methane gas (112) and biosludge are formed;
g) means for extracting methane gas (112) from the anaerobic methane reactor (108);
h) means for discharging the biosludge from the methane reactor (108);
i) a precipitator (128) for precipitating pre-purified waste water (124) from the biosludge, by means of which concentrated biosludge is created; and
j) means for returning (130) the concentrated biosludge into the anaerobic methane reactor (108).

**Revendications**

**1.** Procédé de production d'un biogaz à partir d'une eau résiduaire contenant du lactosérum, comportant les étapes suivantes :

a) amenée d'une eau résiduaire (104) contenant du lactosérum à une cuve de séparation ou à une conduite de séparation (105) ;
b) séparation, à partir de la cuve de séparation ou de la conduite de séparation (105), de l'eau résiduaire (102) contenant du lactosérum, faiblement chargée, ayant un taux de contamination organique inférieur à un seuil prédéfini ;
c) évacuation, à partir de la cuve de séparation ou de la conduite de séparation (105), de l'eau résiduaire (100) contenant du lactosérum, fortement chargée, ayant un taux de contamination organique supérieur à un seuil prédéfini, et amenée, à un réservoir (106), de l'eau résiduaire (100) contenant du lactosérum, fortement chargée ;
d) hydrolyse de l'eau résiduaire (100) contenant du lactosérum, fortement chargée, dans le réservoir (106) ;
e) évacuation de l'eau résiduaire (100) fortement chargée à partir du réservoir (106) et amenée de l'eau résiduaire (100) fortement chargée à une cuve de conditionnement ou à une conduite de conditionnement (200) ;
f) conditionnement de l'eau résiduaire (100) fortement chargée, à l'aide de la cuve de conditionnement ou de la conduite de conditionnement (200) ;

f1) le conditionnement (200) étant réalisé par dosage (207) de sels de métaux ferreux ;
f2) le dosage (207) des sels de métaux ferreux étant réalisé en fonction de la DCO et de la concentration du soufre mesurées dans l'alimentation (104), et d'un débit volumique d'entrée ;

g) transfert de l'eau résiduaire (100) fortement chargée et conditionnée dans un réacteur de méthanisation anaérobie (108) ;
h) méthanisation de l'eau résiduaire (100) fortement chargée dans un réacteur de méthanisation anaérobie (108), à l'aide de microorganismes anaérobies, ce qui provoque la formation de méthane gazeux (112) et d'une boue biologique ;
i) récupération du méthane gazeux (112) à partir du réacteur de méthanisation anaérobie (108) ;
j) évacuation de la boue biologique à partir du réacteur de méthanisation (108) ;
k) séparation de l'eau résiduaire pré-purifiée (124) à partir de la boue biologique, ce qui forme une boue biologique concentrée (130) ; et
l) renvoi de la boue biologique concentrée (130) dans le réacteur de méthanisation anaérobie (108).

**2.** Procédé selon la revendication précédente, **caractérisé en ce que** la séparation en eaux résiduaires faiblement chargée et fortement chargée s'effectue dans la cuve de séparation ou dans la conduite de séparation (105) par l'intermédiaire d'un séparateur à bifurcation.

3. Procédé selon l'une des revendications précédentes, **caractérisé en ce que** l'eau résiduaire faiblement chargée (102) et l'eau résiduaire pré-purifiée (100) sont envoyées à une unité commune de purification plus poussée (204).

4. Procédé selon l'une des revendications précédentes, **caractérisé en ce que** le seuil prédéfini pour la demande chimique en oxygène est de 3000 mg/litre.

5. Dispositif pour la production d'un biogaz à partir d'une eau résiduaire contenant du lactosérum, comportant les constituants suivants :

   a) une cuve de séparation ou une conduite de séparation (105) pour recevoir une eau résiduaire (104) contenant du lactosérum ;
   b) une moyen pour séparer de la cuve de séparation ou de la conduite de séparation (105) une eau résiduaire (102) contenant du lactosérum, faiblement chargée, ayant un taux de contamination organique inférieur à un seuil prédéfini ;
   c) un réservoir (106) pour recevoir, à partir de la cuve de séparation ou de la conduite de séparation (105), une eau résiduaire (104) fortement chargée, ayant un taux de contamination organique supérieur à un seuil prédéfini ;
   d) un moyen pour l'hydrolyse, dans le réservoir (106), de l'eau résiduaire fortement chargée ;
   e) un moyen pour évacuer du réservoir (106) l'eau résiduaire (100) fortement chargée, et un moyen pour amener à une cuve de conditionnement ou à une conduite de conditionnement (200) l'eau résiduaire (100) fortement chargée ;
   f) un réacteur de méthanisation anaérobie (108) pour recevoir l'eau résiduaire conditionnée (100), dans lequel il y a formation de méthane gazeux (112) et d'une boue biologique ;
   g) un moyen pour obtenir du méthane gazeux (112) à partir du réacteur de méthanisation anaérobie (108) ;
   h) un moyen pour évacuer du réacteur de méthanisation (108) la boue biologique;
   i) un séparateur (128), pour séparer l'eau résiduaire purifiée (124) de la boue biologique, avec formation d'une boue biologique concentrée ; et
   j) un moyen pour le renvoi (130), dans le réacteur de méthanisation anaérobie (108), de la boue biologique concentrée.

Fig. 1

EP 2 226 295 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19946299 A1
- DE 19648646 A1
- EP 0712381 B1